Europäisches Patentamt

European Patent Office

Office européen des brevets

(19)

(11) **EP 1 193 541 A2**

(12) **EUROPEAN PATENT APPLICATION**

(43) Date of publication:
03.04.2002 Bulletin 2002/14

(51) Int Cl.$^7$: **G03B 21/13**, G06T 3/00, H04N 5/74

(21) Application number: 01304984.6

(22) Date of filing: 07.06.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.09.2000 JP 2000294835**

(71) Applicant: Shadow Entertainment, Inc.
Tokyo 161-0031 (JP)

(72) Inventors:
• **Sakakibara, Masato,**
**c/o Shadow Entertainment, Inc.**
**Shinjuku-ku, Tokyo 161-0031 (JP)**
• **Katsuo, Noboru, c/o Shadow Entertainment, Inc.**
**Shinjuku-ku, Tokyo 161-0031 (JP)**

(74) Representative: **Brown, Kenneth Richard et al**
**R.G.C. Jenkins & Co.**
**26 Caxton Street**
**London SW1H 0RJ (GB)**

(54) **Projection system and method correcting for image distortions**

(57) It is an object of the present invention to deliver images from a server, and project and display them with few distortions.
When image information is stored in an image server (11) and the stored images are delivered via a network (17) and are projected and displayed on a screen by a projector (13), an image correction device (15) receives the images provided by the image server (11), corrects the images in advance to cancel any projected distortion and outputs them to the projector (13).

# FIG.1

EP 1 193 541 A2

**Description**

BACKGROUND OF THE INVENTION

Field of the Invention

The present invention relates to a projection method and system for projecting images on a screen with few distortions.

Description of the Related Art

There is a demand for displaying various kinds of images, using a projector, on various kinds of surfaces such as a wall surface of a building, using such surface as a screen.

When images are projected by a projector, there is a problem in that display images are indistinct as the projected images are distorted or the surroundings of the images are lighted amorphously. For example, when an original image is rectangular, the original image actually displayed may be distorted and its surroundings may be lighted amorphously. Particularly, when a wall surface of a building, etc. is used as a screen, the installment location of a projection device and other factors change every time and, therefore, there is a problem in that it is difficult to make fine adjustments.

Moreover, when images are projected on places such as a wall surface of a building, the places to install equipment for displaying images are often insufficient, and it is sometimes difficult to prepare the images to be displayed in a form of a video, or on the spot.

Taking the above circumstances into consideration, it is an object of the present invention to provide a projective system and method capable of displaying proper images with few distortions.

It is another object of the present invention to provide a projection system and method capable of providing object images to be displayed as the occasion demands.

SUMMARY OF THE INVENTION

In order to achieve the aforementioned objects, a projection system according to the first standpoint of the present invention comprises:

an image server for storing image information and delivering the stored images via a network;
an image correction device connected to the image server via the network, the image correction device correcting and outputting the images provided by the image server; and
a projector connected to the image correction device, the projector projecting and displaying the images output from the aforesaid image correction device on optional screens, including a wall surface of a building;

wherein the image correction device corrects the images in advance to cancel any projected distortion caused by the projector and outputs the corrected images.

According to this configuration, it is possible to display images with few distortions in spite of the projector location relative to the screen. Moreover, since the object images to be displayed are supplied to the image correction device from the image server via the network, if a communication device is prepared, there is no need to arrange large-scale image regenerating systems, such as a video deck, on the spot of projection, which is effective for a projection system having limits on installation places.

The aforesaid image correction device may add light shading images, which are shaped based on the projected distortions, to the surroundings of the object images to be displayed in order to cause a lighted region on the screen to be made in a predetermined shape such as a rectangle. According to this configuration, the screen is lighted amorphously, which can prevent display images from being indistinct.

For example, when the projector projects a picture element located at coordinates (x, y) of an original image onto the screen at coordinates(u,v) (=f(x,y) where f is a predetermined function), the image correction device corrects the picture element at the coordinates (x,y) of the original image provided by the image server, (x,y) to transfer the picture element to a position $f^{-1}$ (x,y) as represented by an inverse function $f^{-1}$ of f.

The image server may serially transmit images to the image correction device in accordance with a schedule predetermined in advance, the image correction device may serially correct the moving images by frame and serially supply them to the projector, and the projector may serially project the corrected images.

In order to achieve the aforementioned object, a projection method according to the second standpoint of the present invention comprises the steps of: storing image information in advance in an image server; delivering optional images among the stored images in the image server via a network; receiving the images delivered from the image server via the network and developing original images; correcting the original images in advance in order to cancel any distortion generated by projection; and displaying the images without any distortion on a screen by projecting the corrected images on the screen.

BRIEF DESCRIPTION OF THE DRAWINGS

Fig. 1 is a diagram showing the structure of an embodiment of the image projection system of the present invention.

Fig. 2 is a block diagram showing the structure of the image server shown in Fig. 1.

Fig. 3 is a diagram showing an example data structure of the image DB shown in Fig. 2.

Fig. 4 is a diagram showing an example arrangement of the projector.

Fig. 5 is a block diagram showing the structure of the image correction device shown in Fig. 1.

DESCRIPTION OF THE PREFERRED EMBODIMENTS

A projection system according to an embodiment of the present invention is now explained.

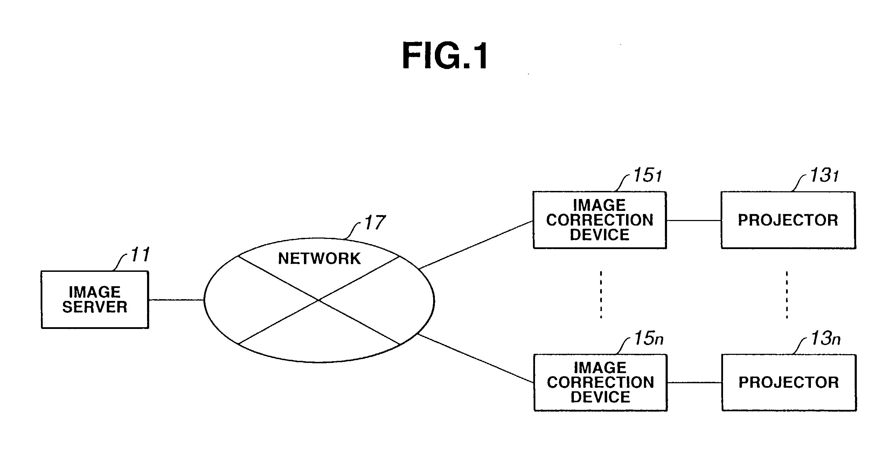

Fig. 1 shows the structure of a projection system according to one embodiment of the present invention.

As shown in Fig. 1, this projection device is composed of an image server 11, a plurality of projectors 13 ($13_1$-$13_n$) and a plurality of image correction devices 15 ($15_1$-$15_n$).

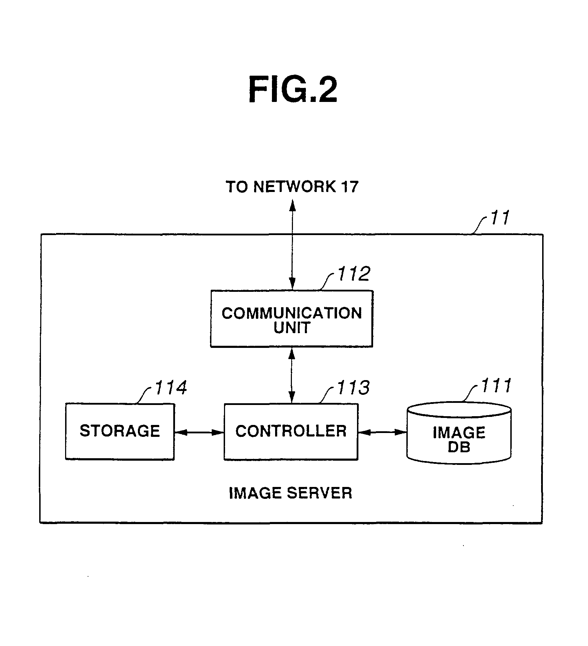

The image server 11 is a computer system for transmitting image data of moving or static images, and for example, as shown in Fig. 2, it comprises image DB (database) 11, a communication unit 112, controller 113 and storage 114, and supplies object images to be displayed to each of the image correction or modification devices 15.

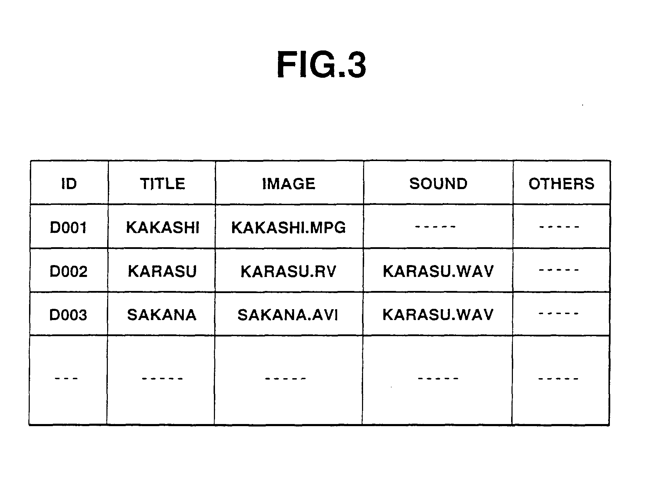

As shown in Fig. 3, in the image database 111, a plurality of image IDs, picture titles, picture data compressed by a certain method such as MPEG system, partial voice data and other data are registered.

The communication unit 112 communicates with the image correction device 15 via a network 17.

In accordance with schedules set in the storage 114, and in response to instructions supplied from the image correction device 15 via the communication unit 112, the controller 113 reads image data from the image DB 111 and supplies them to the image correction device 15.

The storage 114 stores the schedules of image transmission (transmitting times and addresses of receivers) and other data.

The projector 13 comprises a light source, a transparent type display device, and a lens system, and projects and displays, on an optional screen, the corrected images supplied from the image correction device 15. The location of the projector 13 relative to the screen is optional.

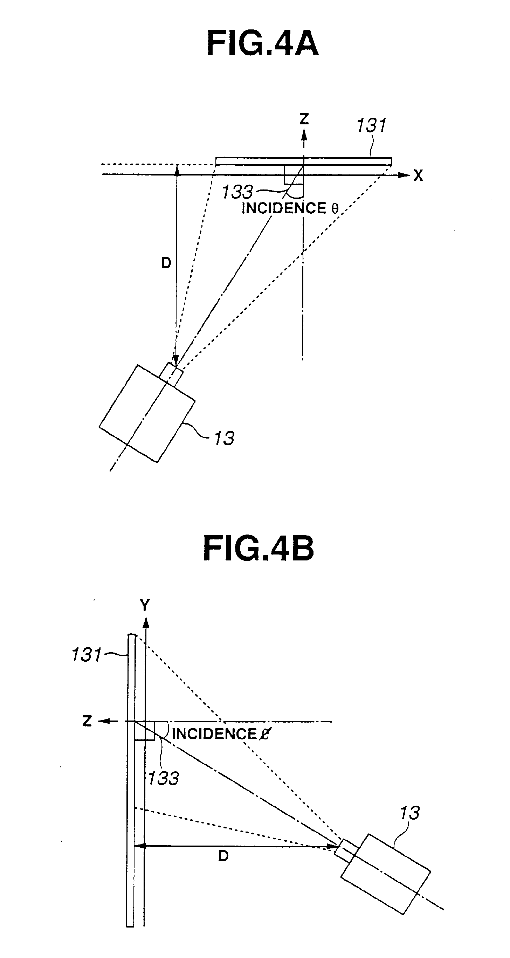

For example, as shown in a plan view of Fig. 4 (a) and in a side view of Fig. 4(b), the projector 13 may be placed at a tilted location at some angle relative to a screen 131.

In Fig. 4 (a) and Fig. 4 (b), D represents a distance between the projector 13 and the screen 131, $\theta$ represents an element in the horizontal direction of a crossing angle between a perpendicular of the screen and an optical axis 133 of the projector 13, and $\phi$ represents an element in the vertical direction of a crossing angle between the perpendicular of the screen and the optical axis 133. In other words, when the x, y and z coordinate system is on the screen 131 and the horizontal direction is the x axis direction, the vertical direction is the y axis direction and the perpendicular of the screen 131 is the z axis direction, the element in the horizontal direction of the crossing angle between the optical axis 133 of the projector 13 and the z axis is $\theta$ and the element in the vertical direction of the crossing angle is $\phi$.

The image correction device 15 shown in Fig. 1 is a device that obtains the object images to be displayed (original images) provided by the image server 11 via the network 17, distorts the original images in advance to cancel the distortions generated by projecting so that no distortion will be generated in the images displayed on the screen 131, and outputs them to the projector 13.

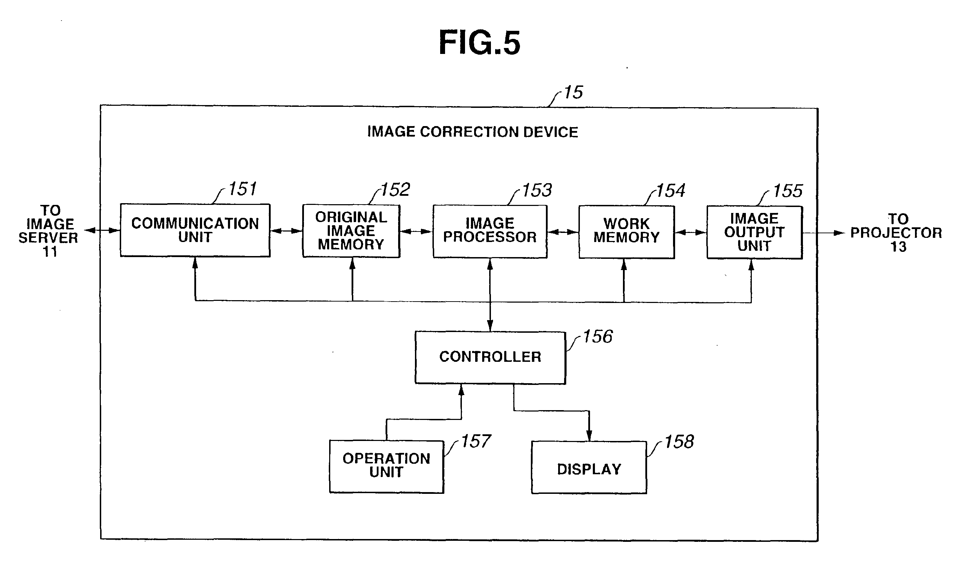

The image correction device 15, as shown in Fig. 5, comprises a communication unit 151, original image memory 152, image processor 153, work memory 154, image output unit 155, controller 156, operation unit 157 and display 158.

The communication unit 151 communicates with the image server 11 under the control of the controller 156 and via the network 17, obtains the object images to be displayed, extends them, regenerates their display frames and stores them in the original image memory 152.

The original image memory 152 is a memory to store the images supplied from the image server 11 in a bitmap form. The original image memory 152 has a storage capacity for a plurality of frames.

The image processor 153 is a circuit to correct the original images on the original image memory 152 by distorting them in a reverse direction so that no distortions will be generated in the images displayed on the screen.

For example, the projector 13 projects a picture element located at coordinates (x,y) of the original image to the location at coordinates (u,v) on the screen 131. In this case, when this relation is represented by (u,v)=f(x,y), the image processor 153 transfers the picture element at coordinates (x, y) in the original image memory 152 to the location represented by $f^{-1}$ (x,y) using the inverse function of $f^{-1}$ of the function f. Further, the image processor 153 reduces the corrected images so that portions of such images will not extend off the display region.

Moreover, the image processor 153 writes, in the surroundings of the corrected images on the work memory 154, light impermeant images to assume a predetermined shape on the screen 131 so that the lighted region on the screen 131 will assume a predetermined shape such as a rectangle or square. In other words, the corrected images of the images corresponding to a black frame are written in the surroundings of the corrected images.

Explaining with reference to the example of Fig. 4, the image processor 153 transfers the picture element located at coordinates (x,y) on each frame on the original image memory 152 to the location indicated by the coordinates (u,v) which is represented by mathematical expression 1.

[Mathematical Expression 1]

$$u = D \cdot \{(Ax\text{-}shift) \cos \theta + D \sin \theta\}/$$

$$\{- (Ax\text{-}shift) \sin \theta \cos \phi - (Ay\text{-}scroll) \sin \phi + D\cos \theta \cos \phi\}$$

$$v = -D \cdot \{(Ax\text{-}shift) \cos \theta \sin \phi + (Ay\text{-}scroll) \cos \phi + D\cos \theta \sin$$

$$\phi\}/\{-(Ax\text{-}shift)\sin \theta \cos \phi - (Ay\text{-}scroll) \sin \phi + D\cos \theta \cos \phi\}$$

$$shift = D\tan \theta \quad scroll = D\tan \phi / \cos \theta$$

D is the distance in a straight line between the projector 13 and the screen 131, A is an optional value showing magnification, $\theta$ is a swing angle in the horizontal direction of the projector 13 and $\phi$ is a swing angle in the vertical direction of the projector 13.

Further, the image processor 153 writes, in the work memory 154, the images corresponding to the black frame that are modified in accordance with the mathematical expression 1.

The work memory 154 is a memory to store the images corrected by the image processor 153 in a bitmap form. The work memory 154 also has a storage capacity for a plurality of frames and stores image frames by the first-in first-out (FIFO) system.

The image output unit 155 reads the image data stored in the work memory 154 and supplies them to the projector 13.

The operation unit 157 supplies various instructions and data to the controller 156.

The display 158 displays the original images, corrected images, menu screen, and other images under the control of the controller 156.

The controller 156 controls the whole operation of the image correction device 15 in accordance with the instructions from the operation unit 157.

Referring to Fig. 1, the image server 11 and the image correction devices $15_1 \sim 15_n$ are connected each other by the communications of the network 17. The network 17 can be any network such as a public telephone line, the Internet, satellite broadcasting, or radio telephone line. The communication unit 112 of the image server 11 and the communication unit 151 of the image correction device 15 respectively have the structure that corresponds to the type of the network 17.

The image projection using the projection system of the above structure is now explained.

First, as shown in Fig. 4, the projector 13 is installed in front of the optional screen 131, for example, a wall surface of a building. Distance D between the projector 13 and the screen 131 is then found, and approximate values of the crossing angles $\theta$ and $\phi$ between the optical axis 133 of the projector 13 and the screen 131 are found.

An operator inputs the values by using the operation unit 157.

Then the operator gives instructions by using the operation unit 157 to display a test pattern.

In response to the instructions, the controller 156 develops images of the test pattern (bitmap pattern) predetermined in the original image memory 152, and supplies D, A, $\theta$ and $\phi$ that are input into the image processor 153 by the operation unit 157.

The image processor 153 responds to the instructions of the controller 156 and transfers the picture element at the location indicated by the location (x,y) of the test pattern as developed in the original image memory 152, for example, to the location in the work memory 154 as represented by the coordinates (u,v) as defined by the mathematical expression 1. This transfer process is a correction to cancel the image distortions at the time of the projection by the projector 13. The image processor 153 writes the corrected images of the frame in the work memory 154.

When the processing of converting images by the image processor 153 is finished, the controller 156 controls the image output unit 155 and causes it to output the corrected images developed in the work memory 154. The image output unit 155 supplies the images developed in the work memory 154 to the projector 13 as, for example, image signals of the NTSC system or analog RGB signals. The projector 13 displays the corrected images defined by the supplied image signals. The corrected images are distorted by the image distortions at the time of the projection. As a result, the images with no distortions and close to the proper test pattern are displayed on the screen 131.

Watching the test pattern actually displayed, the operator operates the operation unit 157 and makes fine adjustments to the distance D, image magnification A and crossing angles $\theta$ and $\phi$.

Accordingly, the image distortions by the processing of the image processor 153 (as represented by the function of $f^{-1}$) are canceled by the image distortions at the time of the projection by the projector 13 (as represented by f of the function f), and the images actually projected on the screen 131 are almost the same as the images with no distortions, which are developed in the original image memory 152.

All the adjustments are completed.

Next, for the actual image projection, the address of the image correction device 15 and projection schedules are set in the storage 114 of the image server 11. For example, in the event that the network 17 is the Internet, the IP address of the image correction device 15 and the projection schedules, such as the order of projection of a plurality of images (for example, Image D0001→D00017→D0032 and so forth), the number of repetitions of each image, and projection time, are set in the storage 114.

The above setting may be made, for example, on a setting screen by accessing to the image server 11 from the image correction device or by using an input device (not shown in the drawings) of the image server 11 or other devices.

At the start time which is set in the storage 114, or when there is a request from the image correction device 15, the image server 11 supplies the requested images to the image correction device 15 to which a receiver's address is attached (or which has made the request).

After buffering the supplied image data, the communication unit 151 of the image correction device 15 extends the image data, develops them in the original image memory 152 and reconstructs their display frames. On the other hand, the image processor 153 transfers the picture element at the location (x,y) of each frame of the original image memory 152 to the location in the work memory 154 as represented by (u,v) as shown by the mathematical expression 1. This transfer processing is a correction (inverse function $f^{-1}$) to cancel the image distortions (function f) at the time of the projection by the projector 13.

The image processor 153 also writes, in the work memory 154, the images for obtaining frames.

The image output unit 155 reads the corrected images developed in the work memory 154, and supplies them to the projector 13. The projector 13 projects and displays the supplied images on the screen 131.

By repeating the above processing, the image server 11 supplies the object images to be displayed to the image correction device 15 in accordance with the predetermined schedule, the image correction device 15 corrects the supplied images and provides the projector 13 with those images, and the projector 13 then displays the corrected images. Accordingly, the images without any distortions, of which lighted region is framed in a predetermined shape, are displayed on the screen 131.

The image correction device 15 does not need to comprise a large image obtaining device such as a video deck and can be realized by a comparatively small device. Moreover, since the projector 13 and the image correction device 15 are composed separately, the image correction device 15 can be applied to a conventional projector 13.

The present invention is not limited to the above embodiment and can be variously modified and applied.

For example, the above embodiment shows the example in which images are projected on the screen 131 by using one projector 13, but images may be displayed by a plurality of projectors 13. In this case, for example, the object images to be composed (or the same images may be used) are supplied to each image correction device 15 by the image server 11, and are then projected and composed by a plurality of projectors 13.

Moreover, it is unnecessary to display on the screen 131 the images provided by the image server 11 in real time. For example, a hard disc device having a large capacity may be added to the structure of Fig. 5, and the images may be downloaded into the hard disc device from the image server 11 before initiating the projection and the downloaded images may be developed in the original image memory 152 and displayed. In this case, for example, display schedules of a plurality of images (such as display order and timetables) are set in the controller 156 or the like, and the controller 156 develops the object images to be displayed in the original image memory 152 in accordance with the schedules.

Such structure may be adopted that music data are sent together with image data from the image server 11 to the image correction device 15, and the music data are then amplified and regenerated.

The image correction device 15 may be composed of an ordinary computer, and programs to operate the ordinary computer as the image correction device 15 may be stored and distributed in a storage medium.

Moreover, the projector 13 may be composed integrally with the image correction device 15.

As explained above, according to the present invention, it is possible to display the images previously prepared in the server on the screen with few distortions.

**Claims**

1.  A projection system comprising:

    an image server for storing image information and transmitting the stored images via a network;
    an image correction device connected to said image server via the network, said image correction device correcting and outputting the images provided by said image server; and
    a projector connected to said image correction device, said projector projecting and displaying on a screen the images output from said image correction device;

    wherein said image correction device corrects the images in advance to cancel the projected distortion caused by said projector and outputs the images.

2.  A projection system according to claim 1, wherein said image correction device adds a light shading image in a shape determined based on the projected distortion to the surroundings of an object image to be displayed in order to cause the lighted region on said screen to be made in a predetermined shape.

3.  When said projector projects a picture element of an original image located at coordinates (x,y) onto the screen at coordinates (u, v) (=f (x, y) where f is a predetermined function), a projection system according to claim 1 or 2, wherein said image correction device corrects the picture element of the original image at the coordinates (x,y) provided by said image server, to transfer the picture element to a position $f^{-1}$ (x,y) as represented by an inverse function $f^{-1}$ of f.

4.  A projection system according to claim 1, 2 or 3, wherein said image server serially transmits images to said image correction device in accordance with a schedule predetermined in advance,
    said image correction device serially corrects the moving images by frame and serially supplies them to said projector, and
    said projector serially projects the corrected images.

5.  A projection method comprising the steps of:

    storing image information in advance in an image server;
    delivering optional images among the stored images in said image server via a network;
    receiving the images delivered from said image server via the network and developing original images;
    correcting the original images in advance in order to cancel any distortion generated by projection; and
    displaying the images without any distortion on a screen by projecting the corrected images on the screen.

# FIG.1

EP 1 193 541 A2

# FIG.2

TO NETWORK 17

_11_

_112_

COMMUNICATION
UNIT

_114_

STORAGE

_113_

CONTROLLER

_111_

IMAGE
DB

IMAGE SERVER

# FIG.3

| ID | TITLE | IMAGE | SOUND | OTHERS |
|----|-------|-------|-------|--------|
| D001 | KAKASHI | KAKASHI.MPG | - - - - - | - - - - - |
| D002 | KARASU | KARASU.RV | KARASU.WAV | - - - - - |
| D003 | SAKANA | SAKANA.AVI | KARASU.WAV | - - - - - |
| - - - | - - - - - | - - - - - | - - - - - | - - - - - |

# FIG.4A

# FIG.4B

# FIG.5

**IMAGE CORRECTION DEVICE** _15_

TO IMAGE SERVER 11 ↔ **COMMUNICATION UNIT** _151_ ↔ **ORIGINAL IMAGE MEMORY** _152_ ↔ **IMAGE PROCESSOR** _153_ ↔ **WORK MEMORY** _154_ ↔ **IMAGE OUTPUT UNIT** _155_ → TO PROJECTOR 13

**CONTROLLER** _156_

**OPERATION UNIT** _157_   **DISPLAY** _158_

EP 1 193 541 A2